# EUROPEAN PATENT APPLICATION

(11) **EP 2 744 191 A2**
(43) Date of publication of application: **18.06.2014**
(21) Application number: 13192495.3
(22) Date of filing: 12.11.2013
(51) Int. Cl.: H04N 5/232, H04N 7/18, H04N 5/33

(54) **A night driving assistant system using a tablet wirelessly controlling an infrared camera in a motor vehicle**

(30) Priority: 11.12.2012 CN 201210571106
(71) Applicant: Guangzhou SAT Infrared Technology Co., Ltd., Guangzhou Guangdong 510730 (CN)
(72) Inventor: Wu, Jiping, 510730 Guangzhou (CN)
(74) Representative: Pallini Gervasi, Diego

(57) **Abstract**

A night driving assistant system using a tablet wirelessly controlling an infrared camera in a motor vehicle, the system comprising which incorporates in: an infrared camera system detachably fixed to the motor vehicle, capturing the instantaneous infrared thermal images of the road scene while the motor vehicle is moving and outputting the video signals of the captured infrared thermal images; and a magnetic base positioned under the chassis of the infrared camera system, of which its rubber pad with magnets confines the infrared camera system to the motor vehicle; a tablet detachably mounted inside the motor vehicle, connecting wirelessly with the infrared camera system, and displaying the video signals transmitted from the infrared camera system. By manipulating the tablet, functions can be realized such as operating the infrared camera system, recognizing human being/animal, triggering Global Positioning System (GPS) navigation, record/store/redisplay videos as well as processing multi-functions like split-screen display etc. The motor vehicular system is flexible in operation, able to improve traffic safety, especially in darkness or in other adverse weathers such as in fog/snowstorms etc. while the visibility marks very low.

## Description

### FIELD OF THE INVENTION

The present invention is applicable to the field of night driving assistant systems and it relates in particular to a vehicular infrared camera system, specifically to a night driving assistant system using a tablet wirelessly controlling an infrared camera in a motor vehicle.

### TECHNICAL BACKGROUND

It has been proposed previously to provide a vehicular infrared night driving assistant system in which its infrared camera usually connects with its Liquid Crystal Display(LCD) by wires so as to alert the driver in order to avoid dangers in darkness or in adverse weather conditions such as fog, intense rain etc. with the help of infrared thermal images of human beings and animals, so to enhance safety while driving. However, the infrared camera and the LCD of the previous system often respectively fixed on or inside the motor vehicle, they are not easy to be detached, which results in difficulties in repairing and maintenance. Furthermore, conventional IR systems cannot be integrated with GPS navigation systems and represent a stand-alone apparatus to be operated separately: this constitutes a considerable constructional limit which leads to distractions for the driver while driving, thus raising the probability of incurring into an accident.

### SUMMARY OF THE INVENTIOIN

The present invention seeks to provide an improved night driving assistant system.
According to one aspect of this invention, there is provided a night driving assistant system making use of a tablet wirelessly controlling an infrared camera in a motor vehicle, the night driving assistant system comprising: an infrared camera system detachably fixed to the motor vehicle through a magnetic base to instantaneously capture infrared thermal images of the road scene and to instantaneously transmit the captured video signals of the infrared thermal images to a tablet so as to be visualized on its touch screen LCD; a magnetic base mounted to the chassis of the infrared camera system for positioning the infrared camera system on the motor vehicle; a tablet PC detachably installed inside the motor vehicle, e.g. through adhesive or magnetic means, wherein the tablet is provided with both an operating system and a Global Positioning System (GPS) navigation system as well. The infrared camera communicates wirelessly with the tablet inside the vehicle, and the touch screen of the LCD of the tablet displays instantaneously the infrared thermal images which have recognized the observed object.

According to the present invention, the infrared camera is made up of a chassis comprises a housing, a left buckle and a right buckle, an automatically locked lamp-equipped water-proof switch positioned on one side of the housing, which is able to control the power switch of the infrared camera. The housing of the chassis further comprises a first bottom face, a slope cut face and a second flat face, wherein:
the first bottom face provides a battery compartment and screw holes, the battery compartment is a place where battery are located and serve as power generator for the infrared camera system, the screw holes are used to connect tightly the chassis with the magnetic base through screws;
the inside of the top end of the slope cut face contains two non-connected axes on its both sides, wherein:
   The left axis is an axis connecting with the housing of the chassis through the left buckle by screws., A thin nut is provided at the inside of the housing of the chassis, the screws being attached tightly the housing of the chassis to the infrared camera; a manual rotating mechanism is located on the thin nut axis and, can tight the infrared camera while it also enables the infrared camera to rotate manually. The manual rotating mechanism is configured as: a gasket next to the thin nut; a wavy spring on the right of the gasket, wherein the wavy spring can effectively tight the gear group so as to prevent the infrared camera from unfastening; a gear group on the right of the wavy spring which is a pair of identical gears, where the left gear of the gear group connects with the chassis while the right one is connecting with the middle part of the seal shell of the infrared camera, while the infrared camera is manually moved, the left and the right axes rotate, but while the infrared camera keeps stationary, the gear group serves as the solidified mechanism.
   A right axis is a hollow thick axis, in which wires, which connects the core of the infrared camera with the battery unit, are built in. The infrared camera utilizes the outside screw thread together with the right buckle to connect the core of the infrared camera and the chassis.

The slope cut face has protruding lines on the top of its both outer sides, the protruding lines facilitate the holding of the infrared camera because it enhances the friction of the surface in case a smooth surface easily enables the infrared camera to slip down from the hands.

In one embodiment of this invention, the infrared camera is fixed to the chassis to capture the infrared thermal images of the road scene while a motor vehicle is moving, and to wirelessly transmit the video signals to the tablet for displaying the video on its touch screen. At the same time, the infrared camera receives the wireless signals transmitted from the tablet in order to adjust the brightness and gain etc. The infrared camera is designed in streamline and further comprises:
a shell mounted on the chassis, said shell having three parts, a top part, a middle part and a bottom part, the top part and the bottom part respectively fixed onto the middle part through screws, the middle part is a hollow one, ships alike, an integrated construction with the chassis;
an infrared camera core unit fixed to the front end of the middle part through screws, receiving signals regarding the brightness, gain, human being/animal recognition and the "on"/"off" signals of the power from the tablet and conducts these instructions, and transmits the status of the core unit back to the tablet in order to present on its touch screen;
a wireless receive-and-transmit unit positioned at the rear end of the middle part to achieve the wirelessly communication with the tablet.

In one embodiment of this invention, the wireless receive-and-transmit unit comprises the following characteristics: a 433/315 MHz wireless data receive-and-transmit module transforms the wireless signals transmitted from the tablet into serial port signals so as to have the infrared camera core unit conducted and transmits the status quo of the core unit to the tablet through the 433/315 MHz wireless data receive-and-transmit module. A 2.4GHz video (RF) wireless transmitter module built in the infrared camera, transforms the CVBS analog signals into wireless video signals and transmits the wireless video signals to the 2.4GHz multi-frequency analog video (RF) wireless receiver module

The infrared camera core unit of this invention includes: an operating module used to receive serial port signals transmitted from the 433/315 MHz wireless data receive-and-transmit module of the wireless receive-and-transmit unit, to conduct instructions and to transmit the status quo of the core to the 433/315 MHz wireless data receive-and-transmit module, finally, to present on the touch screen of the tablet.

Alternatively the magnetic base is a Chinese patented magnetic base applied for by Guangzhou SAT Infrared Technology Co. Ltd. in 2008 with the patent number of ZL 2008 2 0110307.7.

In another embodiment of this invention, the tablet includes a motherboard located within the tablet, which is built on an intelligence operating system, and can achieve the operation of the infrared camera core through the CPU of the motherboard, and also can achieve functions such as the adjustment of the brightness/gain of the infrared thermal images, the perception of on/off of the recognition of human being/animal, the record/store/redisplay of the infrared video, the on/off of the power as well as multi-function processing etc.
A human being/animal recognizing module positioned inside the tablet, receives the video signals of the infrared thermal images transmitted from the 2.4 GHz multi-frequency analog video (RF) wireless receiver module, processes the signals to mark the human beings/animals so as to present on the touch screen of the tablet;
2.4 GHz multi-frequency analog video (RF) wireless receiver module located inside the tablet, receives the wireless video signals transmitted from the infrared camera and transforms the video signals into analog signals so as to address the interference problem between machines by using multiple frequency point;
433/315 MHz wireless data receive-and-transmit module built inside the tablet, receives the wireless signals transmitted from the 433/315 MHz wireless data receive-and-transmit module of the infrared camera core unit and transforms the signals into serial port signals in order to transmit them to the motherboard; at the same time, the 433/315 MHz wireless data receive-and-transmit module built inside the tablet receives the serial port signals transmitted from the motherboard and transforms the signals into wireless signals in order to transmit them back to the 433/315 MHz wireless data receive-and-transmit module of the infrared camera core, and by this way, to achieve the wireless communication between the tablet and the infrared camera.

Preferably the tablet further includes a touch screen displaying the infrared thermal images; the touch screen is a high-resolution multi-touch capacitive touch screen.

Preferably, the touch screen includes an infrared control interface which enables users to achieve the object of operating the infrared camera core through touching the icons presented on the interface so as to record/store/redisplay video and to split the interface into two divided screens, one presenting the instantaneous road scene navigation map and the other displaying the instantaneous infrared thermal images of the roadway.

Conveniently, the infrared control interface includes a power switch icon using the intelligence operating system of the tablet to start up the power through touching the icon and then to close the power by touching the red icon "□,X"on the top right corner of the touch screen. A record/store/redisplay icon is located at the left lower corner of the touch screen: by touching the icon, the tablet can instantaneously record the video and the annotation footage of the road scene while the vehicle is moving; by retouching the icon, the mode enters into the procedure of storing, at any time, a user can touch the icon to repeat and listen to the recorded document in order to facilitate the post processing.

Preferably the infrared control interface, through the intelligence operating system, can proportionately display the instantaneous road scene annotation navigation map and the instantaneous infrared thermal images of the road scene in the form of split-screen.

Advantageously the infrared camera is free in installment and detachment without any needs of modifying the vehicle.

Advantageously the tablet is installed and detached freely, and the tablet can achieve all the functions a high-end tablet can achieve.

Alternatively the tablet further includes a Big Dipper/ Global Positioning System (GPS) navigation module integrated in the motherboard, displays, through the touch screen, the navigation map by Big Dipper/GPS, wherein, the Bid Dipper/GPS map can be displayed in split-screen or in full screen.

### BRIEF DESCRIPTION OF THE DRAWINGS

In order that the invention may be more readily understood, and so that further features thereof may be appreciated, the invention will now be described, by way of example, with reference to the accompanying drawings in which:
FIG.1 is a block diagram showing the structure of a night driving assistant system wirelessly achieving the communication between an infrared camera system and a tablet according to one embodiment of the present invention,
FIG. 2 is an infrared camera system with its chassis and a magnetic base which is attached to the chassis in one embodiment of the invention,
FIG. 2A, 2B and 2C are diagrams showing each part of the infrared camera system wherein 2A being the infrared camera alone, and 2B the chassis while 2C showing the bottom face of the chassis in one embodiment of the present invention,
FIG. 3 is an exploding diagram of the infrared camera in one embodiment of the present invention,
FIG 3A is a diagram of a wireless receive-and-transmit unit of an infrared camera according to one embodiment of the present invention,
FIG. 4 is an exploding diagram of the chassis of an infrared camera system together with a diagram of an internal structure of a magnetic base according to the present invention,
FIG 4A is a diagram of a bottom view of the magnetic base from FIG.4,
FIG. 5 is a flowchart showing an infrared camera wirelessly communicating with a tablet according to one embodiment of the present invention,
FIG. 6 is a diagram showing an infrared control interface of a tablet according to one embodiment of the present invention,
FIG. 7 is a diagram showing a video record/store/redisplay interface of a tablet according to one embodiment of the present invention,
FIG. 8 is a diagram showing a proportionate split-screen display of a Big Dapper/GPS navigation system of a tablet according to one embodiment of the present invention,
FIG. 8A and 8B are diagrams showing respectively full screen of either the Big Dapper or GPS navigation system,
FIG. 9 is a diagram showing positions of an infrared camera system, a tablet and a suck chuck cage etc. attached to a vehicle according to one embodiment of the present invention,
FIG. 10 is a diagram showing positions of an infrared camera system, a tablet and a skid mount etc. attached to a vehicle according to another embodiment of the present invention.

### DETAILED DESCRIPTION OF THE INVENTION

The foregoing and other objects, aspects and advantages of the present application will become more apparent from the following detailed description of the embodiments in the present application taken in conjunction with the preferred embodiments and accompanying drawings. The embodiments here are only used to illustrate but not to limit the present application.

With the increasing prevalence of motor vehicles such as automobiles, a driver's ability of recognizing pedestrians and animals depending on the conventional visible lamps of the vehicle can no longer suffice the requirement of safety driving, particularly in low visibility conditions such as at night or in fog, rain, dust etc.. Devices like infrared cameras, due to their property of not being conditioned by darkness or adverse weathers, can ensure, if equipped on the vehicle, that safe driving behavior is thereby rendered possible.

Conventionally, an undetachable infrared camera, on the one hand, is mostly positioned on the motor vehicle, what therefore makes difficult the repairing or its adjustment; on the other hand, the infrared camera often connects with the LCD through wire, and this further confines both the infrared camera and the LCD to where they are, thus bringing inconvenient limitations.

In addition, an LCD of an infrared camera system conventionally functions only to perform the display of infrared images. A motor vehicle has to integrate other modem software such as the Big Dipper or Global Positioning System (GPS) navigation system to suffice the market.

In one embodiment of the present investment, preferably, a night driving assistant system using a tablet wirelessly controlling an infrared camera in a motor vehicle, a solution of wirelessly connecting the detachable infrared camera with the tablet which carries an intelligent operating system. The present invention not only brings the advantages of a portable instrument like a tablet, but also allows to obtain a great degree of freedom in choosing the best possible configuration and positioning for both the wireless infrared camera and the tablet. In addition to said constructional advantages, such a system greatly facilitates the operation of a driver so as to increase the level of traffic safety.

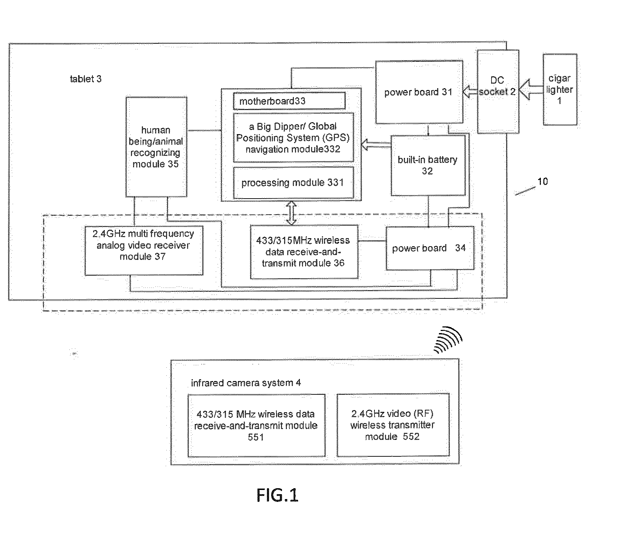

Referring initially to FIG.1 of the accompanying drawings, a night driving assistant system comprises: a tablet 3 with its touch screen 10 detachably positioned inside the motor vehicle. Electric current flows from the cigar lighter 1 to run through the DC socket 2, finally entering into the built-in power board 31 of the tablet 3; and after changing voltage current, it is divided and outputted respectively by said built-in power board 31 to a motherboard 33 and to a built-in battery 32 of the tablet 3. There is a third wisp of electric current outputted to another power board 34 of the tablet 3. The power board 31 functions as a voltage stabilizer, in case the external power fluctuates to affect the consequences of operating the tablet 3. The built-in battery 32 powers the tablet 3 under the condition of no external battery so as to guarantee the normal work of the tablet 3. The power board 34 provides power to a 433/315 MHz wireless data receive-and-transmit module 36 of the tablet 3, a 2.4GHz multi-frequency analog video (RF) wireless receiver module 37 and a human being/animal recognizing module 35. The 2.4GHz multi-frequency analog video (RF) wireless receiver module 37 receives the wireless video signals from the infrared camera system 4, and transforms the signals into analog video ones to output to the human being/animal recognizing module 35. The 2.4GHz multi-frequency analog video (RF) wireless receiver module 37 has addressed the problem of interference among devices through multiple frequency point. The human being/animal recognizing module 35 receives the analog video signals from the 2.4GHz multi-frequency analog video (RF) wireless receiver module 37, converting them into digital video signals. With the human being recognizing function, the module further transforms the digital video signals into analog video signals in order to transmit them to the processing module 331 to display on the touch screen 10 in the form of thermal infrared images. The 433/315MHz wireless data receive-and-transmit module 36, located inside the tablet 3, receives the wireless signals from the 433/315 MHz wireless data receive-and-transmit module 551 of the infrared camera core unit 54, and converts the signals into serial port signals to transmit to the motherboard 33; at the same time, the module 36 receives the serial port signals from the motherboard 33, and converts them into wireless signals to transmit to the module 551 of the infrared camera core unit 54, thus to realize the wireless communication between the tablet 3 and the infrared camera system 4. The motherboard 33 receives the instructions from the control interface 101 of the touch screen 10, processed by the processing module 331 in order to display on the control interface 101. The motherboard 33 further includes a Big Dipper/Global Positioning System (GPS) navigation module 332, and conducts instructions relating Big Dipper/GPS system from the control interface. This is only one embodiment of the present invention. In another embodiment of the present invention, for instance, the motherboard may preferably integrate video storing module, annotation module etc. An infrared camera system 4, detachably mounted on the motor vehicle. The infrared camera 5 built in a 433/315 MHz wireless data receive-and-transmit module 551. The module 551 transforms the wireless signals from the tablet 3 into serial port signals in order to transmit the signals to the infrared camera core unit 54 for conducting; and also to transmit the status quo of the core to the tablet 3 through module 551. The 2.4GHz video (RF) wireless transmitter module 552 transforms the CVBS analog signals into wireless video signals and transmits them to the 2.4GHz multi-frequency analog video (RF) wireless receiver module 37 of the tablet 3 thereof, complimenting the wireless communication between the infrared camera system 4 and the tablet 3.

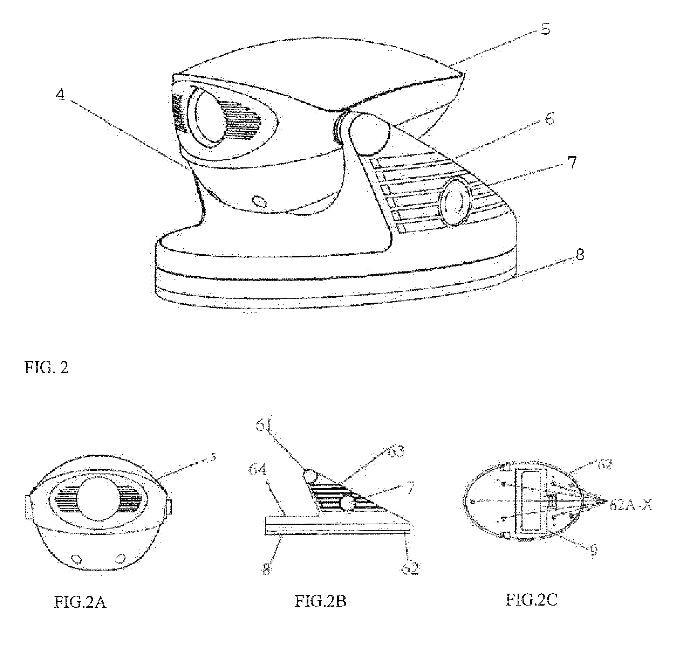

As inferred to FIG. 2, in one embodiment of the present invention, the infrared camera system 4 comprises: an infrared camera 5, a chassis 6 and a magnetic base. There is a power switch 7 is equipped on one side of the chassis 6.

Referring now to FIG 2A-2C, in one embodiment of the present invention, these drawings respectively show the parts of the infrared camera system 4, namely, an infrared camera 5, a chassis 6 and the bottom view (2C) of the chassis 6.

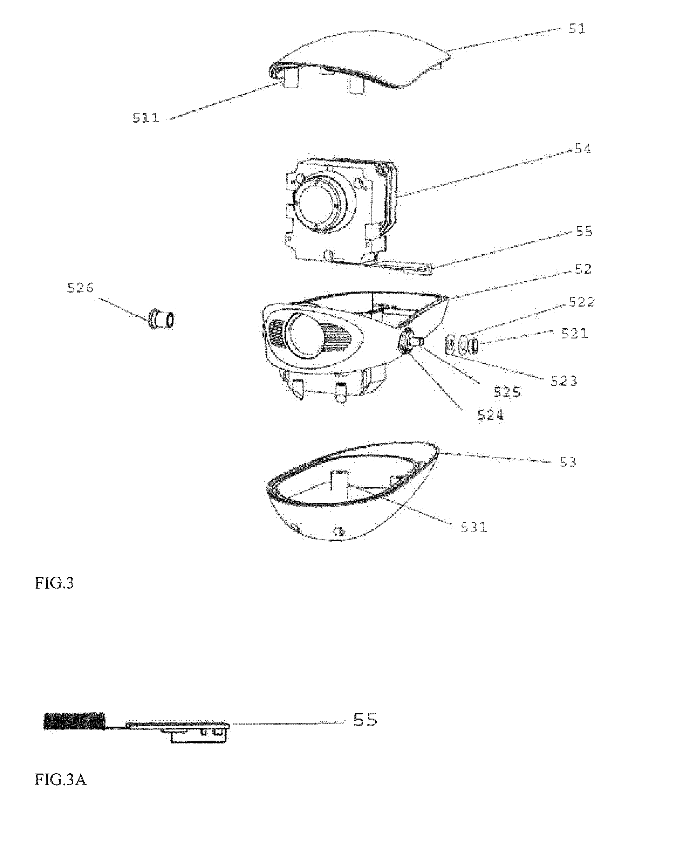

In one embodiment of FIG.3, the exploding schematic view of the infrared camera 5 in the infrared camera system 4 of the present invention shows that the infrared camera 5 resembles a prolonged egg with its appearance of streamline. The infrared camera 5 comprises: a shell located on the chassis 6. The shell is divided into three parts, namely, the top part 51, the middle part 52 and the bottom part 53.The top and bottom parts are positioned on the middle part 52 through screw 511 and 531. The middle part 52 is hollow-ship alike, integrated the chassis 6 as an entirety. An infrared camera core unit 54 fixed on the frontal end of the middle part 52 by screws, receives and conducts instructions from the tablet 3 such as brightness, gain, human being/animal recognition and power on/off, and simultaneously transmits the status of the core back to the tablet 3. A wireless receive-and-transmit unit 55 jointed with the rear end of the middle part 52, realizes the wireless communication between the infrared camera system 4 and the tablet 3.

FIG. 3 shows the said wireless receive-and-transmit unit 55.

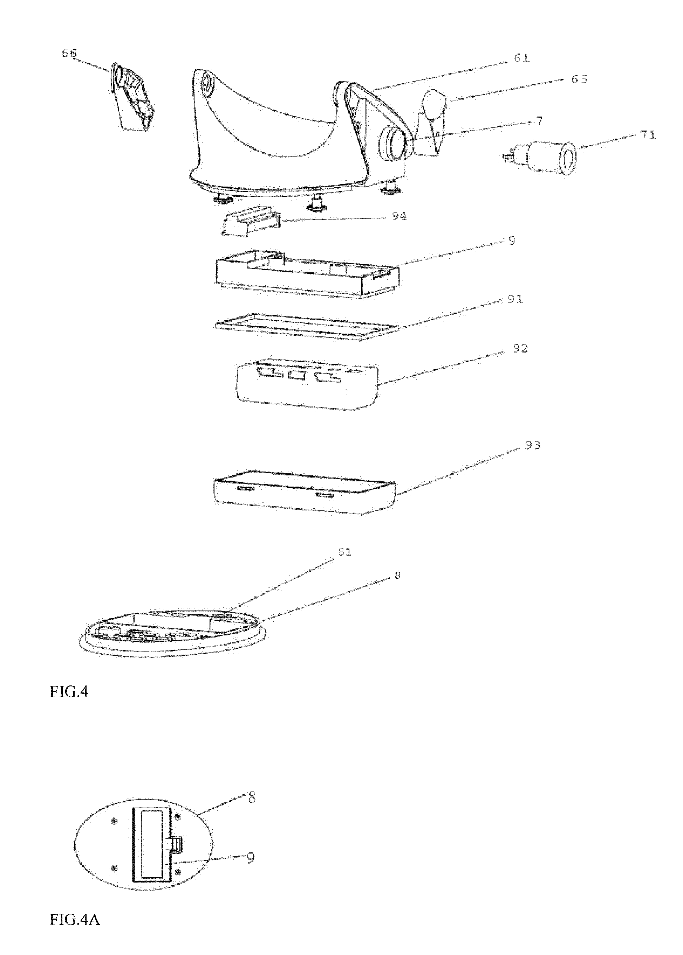

Referring now to the combination of FIG. 4 and FIG. 3, together with FIG. 2B and 2C, in one embodiment of the present invention, these drawings show the chassis 6 of the infrared camera system 4 and its manual rotating mechanism, wherein: the chassis 6 comprising a housing 61, a left buckle 65 and a right buckle 66, an automatically locked lamp-equipped water-proof switch 71 connected to one side of the housing, which is able to singly control the power switch of the infrared camera. The housing of the chassis further comprising a first bottom face 62, a slope cut face 63 and a second flat face 64, wherein: the first bottom face 62 provides a battery compartment 9 and screw holes 62A-X. The battery compartment 9 is used to confine battery 92 to the battery compartment 93, fixed by a seal ring 91 for water and dust tight. The battery 92 provides the infrared camera 4 with power through electrode 94. The screws 62A-X is used to fix the chassis 6 on the magnetic base 8 through screws. On the top ends of the slope cut face 63, there are two disconnected axes in conjunction with either inside walls by screws, wherein: The left axis 525 is an axis which connects with the housing 61 of the chassis 6 through the left buckle 65 by screws, the said axis 525 constitutes: a thin nut 521 provided at the inside of the housing 61 of the chassis 6, screws attached tightly the housing 61 of the chassis 6 to the infrared camera system 4; a manual rotating mechanism is located on the axis 525, with the axis, the manual rotating mechanism can tight the infrared camera 5 while it also enables the infrared camera 5 to rotate manually, the said manual rotating mechanism is configured as : a gasket 522 sharply next to the thin nut 521; a wavy spring 523 on the right of the gasket 522, and the wavy spring 523 can effectively tight the gear group 524 so as to prevent the infrared camera 5 from unfastening; a gear group 524 on the right of the wavy spring 523 which is a pair of identical gears, the left gear of the gear group 524 connects with the chassis while the right one is connecting with the middle part of the seal shell of the infrared camera 5, while the infrared camera 5 is manually moved, the left and right axes rotate, but while the infrared camera 5 keeps stationary, the gear group 524 serves as the solidified mechanism; A right axis 526 is a hollow thick axis, in which wires, which connects the core of the infrared camera 5 with the battery compartment 9, are built in. The infrared camera 5 utilizes the outside screw thread together with the right buckle 66 to connect the core 54 of the infrared camera 5 and the chassis 6. The slope cut face 63 has protruding lines on the top of its both outsides, the said protruding lines facilitates the holding of the infrared camera system 4 because it enhances the friction of the surface in case a smooth surface easily enables the infrared camera system 4 to slip down from one's hands. The chassis 6 is in conjunction with joints 81 of a specific magnetic base 8 which its magnets are fed to suck to the motor vehicle. The magnetic base 8 is patented with its Chinese patent number of ZL 2008 20110307.7. Guangzhou SAT Infrared Technology Co. Ltd. claims its ownership.

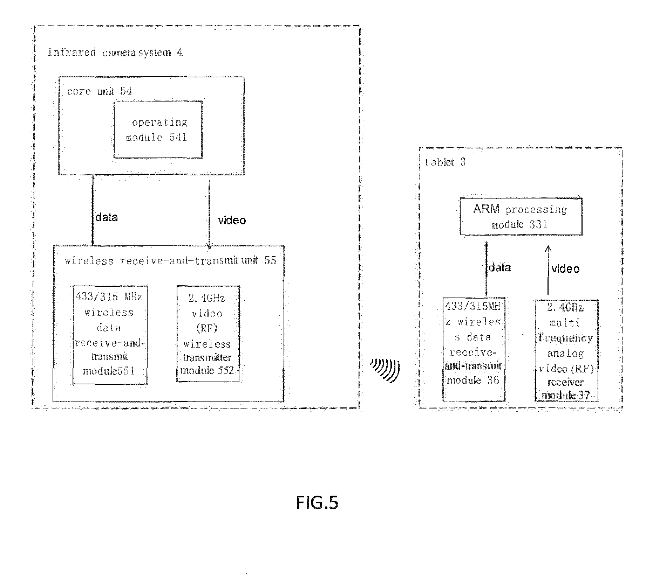

FIG. 5 illustrates the schematic diagram showing how the infrared camera system 4 realizing the wireless communication with the tablet 3, wherein: instructions from the touch screen 10 of the tablet 3 is transmitted to the infrared camera system 4 through 433/315 MHz wireless data receive-and-transmit module 36, the 433/315MHz wireless data receive-and-transmit module 551 of the infrared camera system 4 transforms the wireless signals from the tablet 3 into serial port signals and transmits the converted signals to the operating module 541 of the infrared camera core unit 54 to conduct, and simultaneously reports to the 433/315MHz wireless data receive-and-transmit module 36 of the tablet 3 the status quo of the core unit 54 through 433/315MHz wireless data receive-and-transmit module 551. The operating module 541 of the core unit 54 simultaneously converts the digital signals into video signals, and then transmits the converted signals to the 2.4GHz video (RF) wireless transmitter module 552 of the wireless receive-and-transmit unit 55. In turn, the 2.4GHz video (RF) wireless transmitter module 552 transforms the CVBS analog signals into wireless video signals and transmits back to the 2.4GHz multi frequency analog video (RF) receiver module 37 of the tablet 3 for finally presenting on the touch screen 10 of the tablet 3.

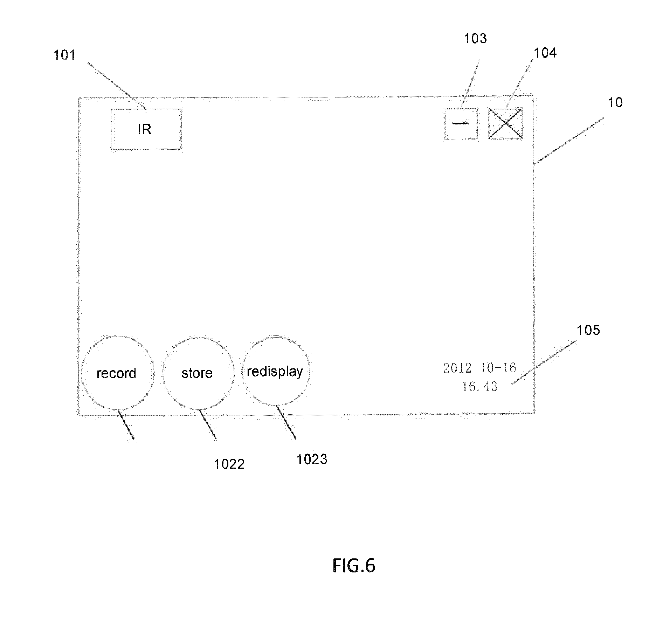

Referring now to FIG. 6, an infrared control interface 101 is fed to the touch screen of the tablet 3, wherein: an "IR" button on the left top of the touch screen 10, once being touched, wirelessly apprises the tablet 3 to operate and control the infrared camera system 4 in order to enable the thermal infrared images of the instantaneous road scene to present on the touch screen 10. Once touching the icon"□,X"104 on the right top corner of the touch screen 10 means the power is off.

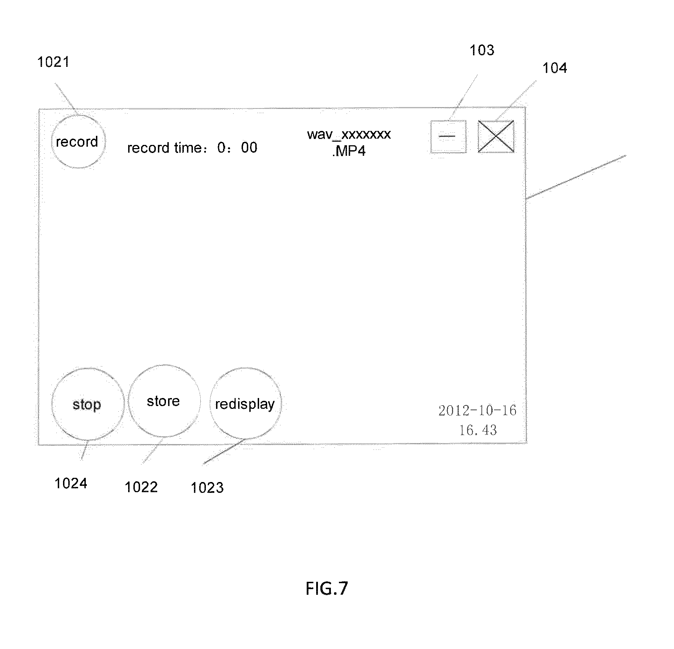

FIG. 7 illustrates a video record/store/redisplay interface of the touch screen 10 of the tablet 3, wherein: touch the "record/store/redisplay" button on the left bottom corner of the touch screen 10, a word "record 1021" becomes evident on the top left corner which indicates that the present invention system enters into the condition of recording annotation and video, buttons such as record 1024, store 1022 and redisplay 1023 simultaneously emerges in a sequence on the left bottom corner, responding actively to one's touch.

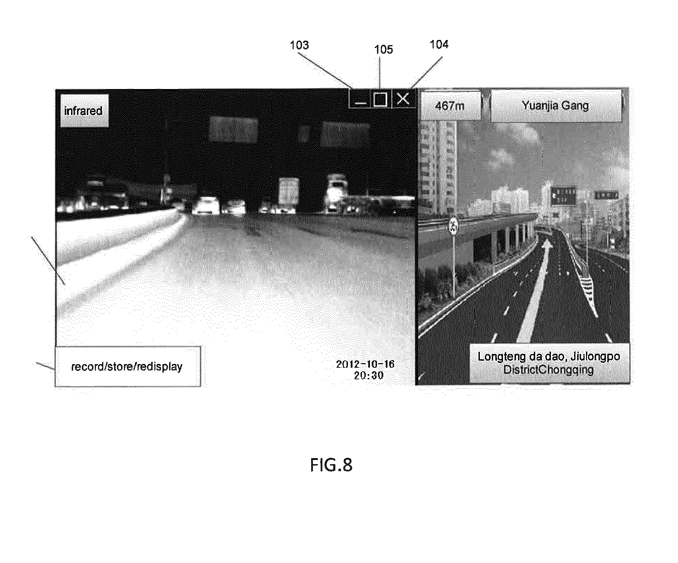

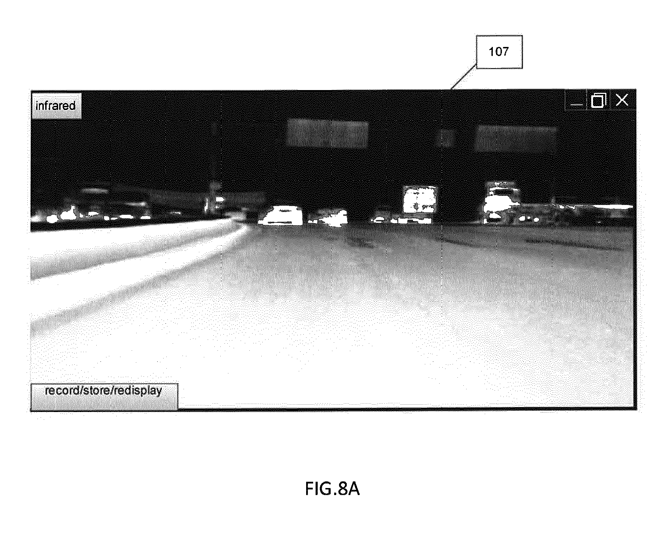

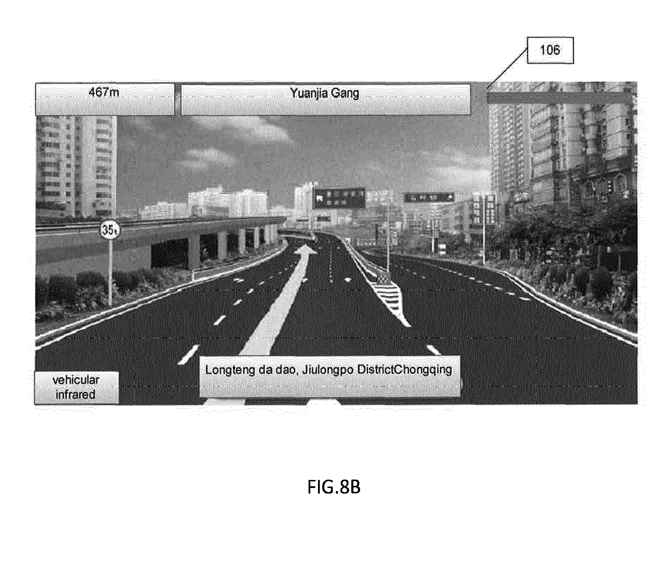

FIG.8 illustrates a split-screen of the touch screen with an infrared image and a Big Dipper/GPS image, wherein: touch the icon "□,-"102 on the top right corner of the touch screen 10 when either of the infrared image or the Bid Dipper/GPS image filled with the full screen, the touch screen 10 will be divided proportionately into two parts for instantly displaying the road scene with an infrared image and a Big Dipper/GPS image. For example, preferably in one embodiment of the present invention, the split-screen will present as a proportion of 2:1 the infrared image 107 and the road scene annotation navigation image 106, thereby facilitate not only to respond to the voice navigation, but also to understand the road scene, leading to the way of enhancing the direction-orientation as well as of improving the driving safety.

Referring now to the combination of FIG.8, FIG 8A-8B, wherein: FIG 8 illustrates the split screen of the infrared image and the Big Dipper/GPS image while FIG 8A provides a full screen of an infrared image and FIG. 8B a full screen of a Big Dipper/GPS image. Touch the icon "□"105 on the top right corner of the touch screen as showing in FIG.8, the touch screen will be in full screen presenting either an infrared image 107 or a Big Dipper/GPS image 106.

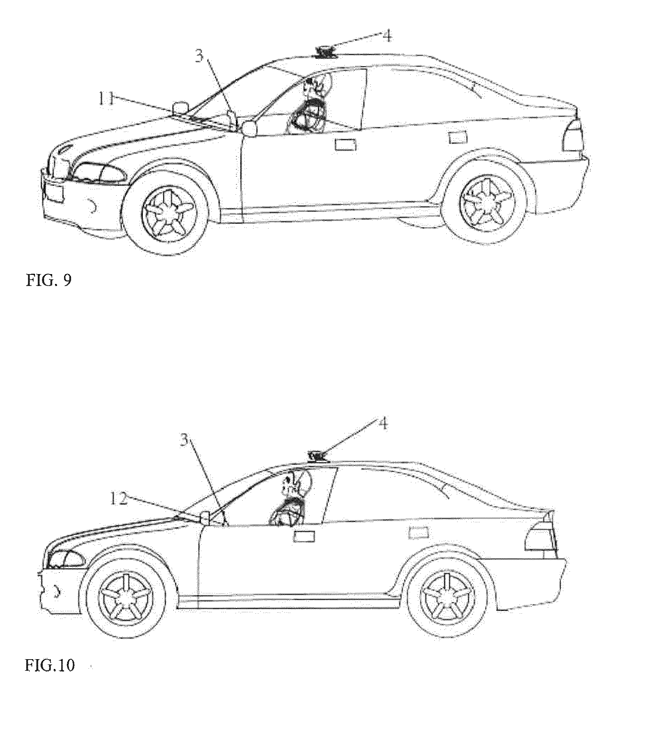

In one embodiment of FIG.9, wherein: the infrared camera system 4 is positioned to the motor vehicle through the specific magnetic base 8. The tablet 3 is detachably mounted inside the motor vehicle through a suck chuck cage 11. Both the infrared camera system 4 and the tablet 3 are easy to install or dismantle. The tablet 3 can well function as any one of the high-end tablet, in one embodiment, for example, the function of telephone voice call.

In another embodiment of FIG. 10, wherein: the infrared camera system 4 is still fixed to the motor vehicle through a magnetic base 8. The tablet 3 is detachably fixed inside the motor vehicle through a skid mount 12. In a similar way, both the infrared camera system 4 and the tablet 3 are easy to install or dismantle. The tablet 3 can well function as any one of the high-end tablet, in one embodiment, for example, the function of telephone voice call.

In the embodiment of the present invention as described above, the infrared camera system takes use of wireless connection to realize the communication with the tablet so as to facilitate the motor vehicle for night driving. Of course, the embodiment of the present invention is not confined to only this description. For example, in another embodiment of the present invention, the present system can be utilized in low-visibility weather such as in fog or in dust, thereby improve the traffic safety of a motor vehicle.

## Claims

1. A night driving assistant system using a tablet wirelessly controlling an infrared camera in a motor vehicle, the system comprising:
An infrared camera system detachably fixed to the motor vehicle through a magnetic base to instantaneously capture infrared thermal images of the road scene while the motor vehicle is moving and to instantaneously transmit the captured video signals of the infrared thermal images to a tablet so as to be presented on its touch screen of its Liquid Crystal Display (LCD);
a magnetic base connected to the chassis of the infrared camera system through screws, of which its rubber pad with magnets positioning the infrared camera on the motor vehicle;
a tablet, as the system being configured, detachably installed inside the motor vehicle through an optional suck chuck cage or a skid mount while the tablet has installed intelligence operating system and Global Positioning System (GPS) navigation system as well, the motor vehicular system, in use, features that the infrared camera wirelessly communicates with the tablet, that the touch screen of the LCD of the tablet displays instantaneously the infrared thermal images which have recognized the human beings/animals.

2. A system according to claim 1 wherein the infrared camera system made up of:
A chassis comprises a housing, a left buckle and a right buckle, a automatically locked lamp-equipped water-proof switch is positioned to one side of the housing, which is able to singly control the power switch of the infrared camera system, the housing of the chassis further comprising a first bottom face, a slope cut face and a second flat face, wherein:
the first bottom face provides a battery compartment and screw holes, the battery compartment is a place where battery locates which serves as power generator for the infrared camera system, the screw holes are used to fasten tightly the chassis with the magnetic base through screws;
the inside of the top end of the slope cut face contains two non-connected axes on its both sides, wherein:
the left axis is an axis which is adjacent to the housing of the chassis through the left buckle by using screws, the axis corresponds to a thin nut provided at the inside of the housing of the chassis, the screws attached tightly the housing of the chassis to an infrared camera; a manual rotating mechanism is located on said axis and can tight the infrared camera while it also enables the infrared camera to rotate manually, the manual rotating mechanism is configured as : a gasket sharply next to the thin nut; a wavy spring on the right of the gasket, and the wavy spring can effectively tight the gear group so as to prevent the infrared camera from unfastening; a gear group on the right of the wavy spring which is a pair of identical gears, the left gear of the gear group connects with the chassis while the right one is connecting with the middle part of the sealing shell of the infrared camera, while the infrared camera is manually moved, the left and the right axes rotate, but while the infrared camera remains stationary, the gear group serves as the solidified mechanism;
a right axis is a hollow thick axis, in which wires, which connects the core of the infrared camera with the battery unit, are built in, the infrared camera utilizes the outside screw thread together with the right buckle to connect the core of the infrared camera and the chassis;
the slope cut face has protruding lines on the top of its both outsides, the protruding lines facilitates the holding of the infrared camera system because it enhances the friction of the surface in case a smooth surface easily enables the infrared camera to slip down from one's hands;
an infrared camera fixed to the chassis to capture the infrared thermal images of the roadway while a motor vehicle is moving, and to wirelessly transmit the video signals to the tablet for displaying the video on its touch screen, at the same time, the infrared camera receives the wireless signals transmitted from the tablet in order to adjust the brightness and gain etc., the infrared camera is designed in streamline, akin to an elongated egg, the infrared camera further comprising:
a shell mounted on the chassis, the shell has three parts, a top part, a middle part and a bottom part, the top part and the bottom part respectively fixed onto the middle part through screws, the middle part is a hollow one, ships alike, an integrated construction with the chassis;
an infrared camera core unit fixed to the front end of the middle part of the said shell through screws, receives signals regarding the brightness, gain, human being/animal recognition and the "on"/"off" signals of the power from the tablet and conducts these instructions, and transmits the current status of the core unit back to the tablet in order to present on its touch screen;
a wireless receive-and-transmit unit positioned at the rear end of the said middle part to achieve the wirelessly communication with the tablet.

3. A system according to claim 1 wherein the wireless receive-and-transmit unit comprises:
a 433/315 MHz wireless data receive-and-transmit module transforms the wireless signals from the tablet into serial port signals so as to have the infrared camera core unit conducted relating instructions and transmits the current status of the core unit to the tablet through the 433/315 MHz wireless data receive-and-transmit module;
a 2.4GHz video (RF) wireless transmitter module built in the infrared camera, transforms the CVBS analog signals into wireless video signals and transmits the wireless video signals to the 2.4GHz multi-frequency analog video (RF) wireless receiver module.

4. A system according to claim 2 wherein the infrared camera core unit comprises:
An operating module used to receive serial port signals transmitted from the 433/315 MHz wireless data receive-and-transmit module of the wireless receive-and-transmit unit, to conduct instructions and to transmit the status quo of the core to the 433/315 MHz wireless data receive-and-transmit module, finally, to present on the touch screen of the tablet.

5. A system according to claim 1, wherein the magnetic base is a Chinese patented magnetic base applied for by Guangzhou SAT Infrared Technology Co. Ltd in 2008 with the patent number of ZL 2008 2 0110307.7

6. A system according to claim 1, wherein the tablet comprises:
a motherboard located inside the tablet, which is built in an intelligence operating system, can achieve the operation of the infrared camera core through the CPU of the motherboard, and also can achieve functions such as the adjustment of the brightness/gain of the infrared thermal images, the perception of on/off of the recognition of human being/animal, the record/store/redisplay of the infrared video, the on/off of the power as well as multi-function processing etc.;
a human being/animal recognizing module positioned inside the tablet, receives the video signals of the infrared thermal images transmitted from the 2.4 GHz multi-frequency analog video (RF) wireless receiver module, processes the signals to mark the human being/animal so as to present on the touch screen of the tablet;
2.4 GHz multi-frequency analog video (RF) wireless receiver module located inside the tablet, receives the wireless video signals transmitted from the infrared camera and transforms the video signals into analog signals so as to address the interference problem between machines by using multiple frequency point;
433/315 MHz wireless data receive-and-transmit module built inside the tablet, receives the wireless signals transmitted from the 433/315 MHz wireless data receive-and-transmit module of the infrared camera core unit and transforms the signals into serial port signals in order to transmit them to the motherboard; at the same time, the 433/315 MHz wireless data receive-and-transmit module built inside the tablet receives the serial port signals transmitted from the motherboard and transforms the signals into wireless signals in order to transmit them back to the 433/315 MHz wireless data receive-and-transmit module of the infrared camera core, and by this way, to achieve the wireless communication between the tablet and the infrared camera.

7. A night driving assistant system according to claim 6, wherein the tablet further comprises:
a touch screen displays the infrared thermal images; the touch screen is a high-resolution multi-touch capacitive touch screen.

8. A system according to claim 7, wherein the touch screen comprises:
an infrared control interface enables users to achieve the object of operating the infrared camera core through touching the icons presented on the interface so as to record/store/redisplay video and to split the interface into two divided plains with one presenting the instantaneous roadway annotation navigation map and the other the instantaneous infrared thermal images of the road scene.

9. A system according to claim 8, wherein the infrared control interface contains the following icons:
a power switch icon using the intelligence operating system of the tablet to start up the power through touching the icon and then to close the power by touching the red icon "□,X"on the top right corner of the touch screen;
a record/store/redisplay icon located at the left lower corner of the touch screen, by touching the icon, the tablet can instantaneously record the video and the annotation footage of the road scene while the vehicle is moving, by retouching the icon, the mode enters into the procedure of storing, at any time, a user can touch the icon to repeat and listen to the recorded document in order to facilitate the post processing.

10. A system according to claim 7, wherein the infrared control interface, through the intelligence operating system, can proportionately display the instantaneous road scene annotation navigation map and the instantaneous infrared thermal images of the road scene in the form of split-screen.

11. A system according to claim 1, wherein the infrared camera is free in installment and dismantlement without any needs of the transformation of the vehicle.

12. A system according to claim 1, wherein the tablet is installed and dismantled free, and the tablet can achieve all the functions a high-end tablet can achieve.

13. A system according to claim 1, wherein the tablet further comprises:
a Big Dipper/ Global Positioning System (GPS) navigation module integrated in the motherboard, displays, through the touch screen, the navigation map by Big Dipper/GPS, wherein, the Bid Dipper/GPS map can be displayed in split-screen or in full screen.
